# EUROPÄISCHE PATENTSCHRIFT

(11) **EP 3 763 180 B1**
(45) Veröffentlichungstag und Bekanntmachung des Hinweises auf die Patenterteilung: **18.12.2024**
(21) Anmeldenummer: 20185126.8
(22) Anmeldetag: 10.07.2020
(51) Int. Cl.: A01B 73/04, A01B 73/06, A01D 57/20, A01D 84/00

(54) **ERNTEVORRICHTUNG ZUM ÜBERFÜHREN DERSELBEN ZWISCHEN EINER ARBEITSSTELLUNG UND EINER TRANSPORTSTELLUNG**
HARVESTING DEVICE FOR TRANSFERRING THE SAME BETWEEN A WORKING POSITION AND A TRANSPORT POSITION
DISPOSITIF DE RÉCOLTE DE TRANSFERT DE CELUI-CI ENTRE UNE POSITION DE TRAVAIL ET UNE POSITION DE TRANSPORT

(30) Priorität: 10.07.2019 DE 102019118738
(43) Veröffentlichungstag der Anmeldung: 13.01.2021
(73) Patentinhaber: CLAAS Saulgau GmbH, 88348 Bad Saulgau (DE)
(72) Erfinder: Boll, Ulrich, 88348 Bad Saulgau (DE)

(56) Entgegenhaltungen:
- EP-A1- 2 789 223
- DE-A1- 102016 117 117
- US-A1- 2015 020 492
- US-A1- 2015 327 428

## Beschreibung

Die Erfindung betrifft eine Erntevorrichtung, nämlich einen Merger oder Pickup-Schwader, nach dem Oberbegriff des Anspruchs 1.

Ein Merger mit den oberbegrifflichen Merkmalen ist aus US 2015/0327428 A1 bekannt.

Aus der EP 2 979 529 B1 ist eine als Merger ausgebildete Erntevorrichtung bekannt. Merger werden auch als Pickup-Schwader bezeichnet. Gemäß diesem Stand der Technik verfügt die als Merger ausgebildete Erntevorrichtung über einen Tragrahmen sowie über ein Fahrwerk. Ferner verfügt die als Merger ausgebildete Erntevorrichtung über als Pickup ausgebildete Aufnahmeorgane zum Aufnehmen von Erntegut sowie über als Bandförderer ausgebildete Querfördereinrichtungen zum Querfördern des aufgenommenen Ernteguts. Der Tragrahmen verfügt über einen Längsträger sowie über Querträger, wobei die Aufnahmeorgane und Querfördereinrichtungen an den Querträgern aufgenommen sind.

Um die aus der EP 2 979 529 B1 bekannte, als Merger ausgebildete Erntevorrichtung zwischen einer Arbeitsstellung und einer Transportstellung zu überführen, sind die Aufnahmeorgane und Querförderer zunächst aus ihrer Arbeitsstellung heraus um eine horizontale Achse nach oben klappbar, wobei anschließend die nach oben geklappten Aufnahmeorgane und Querfördereinrichtungen um eine vertikale Achse nach vorne klappbar sind. Nach der EP 2 979 529 B1 ist es demnach zwingend erforderlich, die Aufnahmeorgane und Querfördereinrichtungen zunächst um eine horizontale, sich in Querrichtung erstreckende Achse nach oben und anschließend um eine vertikale Hochachse nach vorne zu klappen.

Hiervon ausgehend liegt der vorliegenden Erfindung die Aufgabe zugrunde, eine neuartige, als Merger oder Pickup-Schwader ausgebildete, Erntevorrichtung zu schaffen. Diese Aufgabe wird durch eine Erntevorrichtung nach Anspruch 1 gelöst.

Erfindungsgemäß ist ein an einer ersten Seite des Längsträgers angeordneter, das jeweilige Aufnahmeorgan und die jeweilige Querfördereinrichtung aufnehmender, verlagerbarer Querträger aus einer Arbeitsstellung heraus um eine sich in vertikaler Hochrichtung erstreckende Achse relativ zu einem weiteren verlagerbaren Querträger in eine Zwischenstellung und aus dieser Zwischenstellung heraus mit dem weiteren verlagerbaren Querträger um eine sich in horizontaler Längsrichtung erstreckende Achse relativ zu einem am Längsträger angreifenden feststehenden Querträger in eine Transportstellung verlagerbar. Ferner ist ein an einer zweiten Seite des Längsträgers angeordneter, das jeweilige Aufnahmeorgan und die jeweilige Querfördereinrichtung aufnehmender, verlagerbarer Querträger aus einer Arbeitsstellung heraus um eine weitere sich in vertikaler Hochrichtung erstreckende Achse relativ zu einem weiteren verlagerbaren Querträger in eine Zwischenstellung und aus dieser Zwischenstellung heraus mit dem weiteren verlagerbaren Querträger um eine weitere sich in horizontaler Längsrichtung erstreckende Achse relativ zu einem weiteren am Längsträger angreifenden feststehenden Querträger in eine Transportstellung verlagerbar. Bei der erfindungsgemäßen, Erntevorrichtung sind die Aufnahmeorgane und Querfördereinrichtungen aus ihrer Arbeitsstellung heraus zunächst um die jeweilige sich in vertikaler Hochrichtung erstreckende Achse nach hinten und anschließend aus dieser Zwischenstellung heraus um die jeweilige sich in horizontaler Längsrichtung erstreckende Achse nach oben verlagerbar. Hiermit kann die Stabilität der Erntevorrichtung beim Überführen zwischen der Arbeitsstellung und der Transportstellung verbessert werden.

Nach einer vorteilhaften Weiterbildung ist der an der ersten Seite des Längsträgers angeordnete, das jeweilige Aufnahmeorgan und die jeweilige Querfördereinrichtung aufnehmende, verlagerbare Querträger aus der Arbeitsstellung heraus um die sich in vertikaler Hochrichtung erstreckende Achse in einer ersten Richtung um 90°±5° nach hinten in die Zwischenstellung verlagerbar. Der an der zweiten Seite des Längsträgers angeordnete, das jeweilige Aufnahmeorgan und die jeweilige Querfördereinrichtung aufnehmende, verlagerbare Querträger ist aus der Arbeitsstellung heraus um die sich in vertikaler Hochrichtung erstreckende Achse in einer zur ersten Richtung entgegengesetzten zweiten Richtung um 90°±5° nach hinten in die Zwischenstellung verlagerbar.

Das nach hinten Verlagern der Aufnahmeorgane und der Querfördereinrichtungen um die jeweilige sich in vertikaler Hochrichtung erstreckende Achse in die jeweilige Zwischenstellung ist aus Stabilitätsgründen besonders bevorzugt.

Nach einer vorteilhaften Weiterbildung ist der an der ersten Seite des Längsträgers angeordnete, das jeweilige Aufnahmeorgan und die jeweilige Querfördereinrichtung aufnehmende, verlagerbare Querträger aus der Zwischenstellung heraus mit dem jeweiligen weiteren verlagerbaren Querträger um die sich in horizontaler Längsrichtung erstreckende Achse in einer ersten Richtung um 90°±5° nach oben in die Transportstellung verlagerbar. Der an der zweiten Seite des Längsträgers angeordnete, das jeweilige Aufnahmeorgan und die jeweilige Querfördereinrichtung aufnehmende, verlagerbare Querträger ist aus der Zwischenstellung heraus mit dem jeweiligen weiteren verlagerbaren Querträger um die sich in horizontaler Längsrichtung erstreckende Achse in einer zur ersten Richtung entgegengesetzten zweiten Richtung um 90°±5° nach oben in die Transportstellung verlagerbar.

Das anschließende Verlagern der Aufnahmeorgane und Querfördereinrichtungen aus der Zwischenstellung heraus in die Transportstellung um die sich in horizontaler Längsrichtung erstreckende Achse ist ebenfalls aus Stabilitätsgründen bevorzugt.

Nach einer vorteilhaften Weiterbildung stützt sich das jeweilige Aufnahmeorgan bei der Überführung zwischen der Arbeitsstellung und der Zwischenstellung mit Tasträdern auf einem Untergrund ab. Hiermit ist die Stabilität der Erntevorrichtung bei der Überführung derselben zwischen der Arbeitsstellung und Transportstellung weiter verbesserbar.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert.

Dabei zeigt:
- Fig. 1: eine perspektivische Ansicht einer als Merger oder Pickup-Schwader ausgebildeten Erntevorrichtung in Arbeitsstellung;
- Fig. 2: eine Rückansicht auf die als Merger oder Pickup-Schwader ausgebildete Erntevorrichtung in der Arbeitsstellung;
- Fig. 3: eine Seitenansicht auf die als Merger oder Pickup-Schwader ausgebildete Erntevorrichtung in der Arbeitsstellung;
- Fig. 4: eine Draufsicht auf die als Merger oder Pickup-Schwader ausgebildete Erntevorrichtung in einer ersten Zwischenstellung;
- Fig. 5: eine Rückansicht auf die als Merger oder Pickup-Schwader ausgebildete Erntevorrichtung in der ersten Zwischenstellung;
- Fig. 6: eine Seitenansicht auf die als Merger oder Pickup-Schwader ausgebildete Erntevorrichtung in der Zwischenstellung;
- Fig. 7: eine Draufsicht auf die als Merger oder Pickup-Schwader ausgebildete Erntevorrichtung in einer zweiten Zwischenstellung;
- Fig. 8: eine Rückansicht auf die als Merger oder Pickup-Schwader ausgebildete Erntevorrichtung in der zweiten Zwischenstellung;
- Fig. 9: eine Draufsicht auf die als Merger oder Pickup-Schwader ausgebildete Erntevorrichtung in einer dritten Zwischenstellung;
- Fig. 10: eine perspektivische Ansicht einer als Merger oder Pickup-Schwader ausgebildeten Erntevorrichtung in der dritten Zwischenstellung,
- Fig. 11: eine Rückansicht auf die als Merger oder Pickup-Schwader ausgebildete Erntevorrichtung in der dritten Zwischenstellung
- Fig. 12: eine Draufsicht auf die als Merger oder Pickup-Schwader ausgebildete Erntevorrichtung in einer Transportstellung;
- Fig. 13: eine perspektivische Ansicht einer als Merger oder Pickup-Schwader ausgebildeten Erntevorrichtung in der Transportstellung,
- Fig. 14: eine Rückansicht auf die als Merger oder Pickup-Schwader ausgebildete Erntevorrichtung in der Transportstellung,
- Fig. 15: eine Draufsicht auf die als Merger oder Pickup-Schwader ausgebildete Erntevorrichtung in einer Zwischenstellung,
- Fig. 16: eine perspektivische Ansicht auf die als Merger oder Pickup-Schwader ausgebildete Erntevorrichtung in einer weiteren Zwischenstellung,
- Fig. 16a: das Detail X aus Fig. 16,
- Fig. 17: eine Seitenansicht auf die als Merger oder Pickup-Schwader ausgebildete Erntevorrichtung in der Transportstellung,
- Fig. 17a: das Detail Y aus Fig. 17.

Die Erfindung betrifft eine als Merger ausgebildete Erntevorrichtung. Eine solche Erntevorrichtung wird auch als Pickup-Schwader bezeichnet.

Die Erntevorrichtung 10 verfügt über einen Tragrahmen 11 mit einem Längsträger 12 sowie Querträgern 13, 14, 24, 25, 26, 27, 28, 29.

Über den Längsträger 12, nämlich eine am vorderen Ende des Längsträgers 12 ausgebildete Kupplungseinrichtung 15, ist die Erntevorrichtung 10 an ein nicht gezeigtes Zugfahrzeug ankoppelbar, um vom Zugfahrzeug entlang eines zu bearbeitenden Untergrunds gezogen zu werden. Der Längsträger 12 erstreckt sich dabei in Zugrichtung bzw. Ernterichtung.

Die Querträger 13, 14, 24, 25, 26, 27, 28, 29 erstrecken sich in der Arbeitsstellung der Erntevorrichtung 10 quer oder senkrecht zum Längsträger 12.

Erste Querträger 28, 29 greifen fest am Längsträger 12 an.

Zweite Querträger 26, 27 greifen an den ersten Querträgern 28, 29 an und sind relativ zu den ersten Querträgern 28, 29 um horizontale Achsen 30, die sich in Längsrichtung erstrecken, verlagerbar.

Dritte Querträger 24, 25 und vierte Querträger 13, 14 sind gemeinsam gegenüber den zweiten Querträger 26, 27 um vertikale Achsen 31, die sich in Hochrichtung erstrecken, verlagerbar. Die dritten Querträger 24, 25 greifen dabei an den zweiten Querträgern 26, 27 und die vierten Querträger 13, 14 greifen an den dritten Querträgern 24, 25 an.

Die Erntevorrichtung 10 verfügt weiterhin über ein Fahrwerk 16 mit Rädern 17. Das Fahrwerk 16 wird auch als Hauptfahrwerk bezeichnet. Über die Räder 17 des Fahrwerks 16 stützt sich sowohl in einer Arbeitsstellung als auch in einer Transportstellung die als Merger ausgebildete Erntevorrichtung 10 auf einem zu bearbeitenden bzw. zu befahrenden Untergrund ab.

Die Erntevorrichtung 10 verfügt weiterhin über Aufnahmeorgane 18 sowie Querfördereinrichtungen 19.

Die Aufnahmeorgane 18 sind als sogenannte Pickup ausgebildet und dienen dem Aufnehmen von Erntegut vom zu bearbeitenden Untergrund. An einer ersten Seite des Längsträgers 12 sind ein erstes Aufnahmeorgan 18 und eine erste Querfördereinrichtung 19 an dem jeweiligen vierten Querträger 13 aufgenommen. An einer zweiten Seite des Längsträgers 12 sind ein zweites Aufnahmeorgan 18 und eine zweite Querfördereinrichtung 19 an dem jeweiligen vierten Querträger 14 aufgenommen.

Die Aufnahmeorgane 18 verfügen über Aufnahmezinken 20, die zum Aufnehmen des Ernteguts vom Boden um eine sich in Querrichtung erstreckende Achse angetrieben werden. Jedes der Aufnahmeorgane 18 stützt sich in der Arbeitsstellung der Erntevorrichtung 10 über Tasträder 21 auf dem zu bearbeitenden Untergrund ab. In einer Transportstellung sind die Tasträder 21 vom zu bearbeitenden Untergrund abgehoben.

Wie bereits ausgeführt, verfügt die Erntevorrichtung 10 zusätzlich zu den Aufnahmeorganen 18 über die Querfördereinrichtungen 19. Die Querfördereinrichtungen 19 sind als Bandförderer ausgebildet, wobei über die Querfördereinrichtungen 19 das über die Aufnahmeorgane 18 vom zu bearbeitenden Untergrund aufgenommene Erntegut in einer sich zur Längsrichtung quer bzw. senkrecht erstreckenden Querförderrichtung transportierbar ist.

An der ersten Seite des Längsträgers 12 ist eine erste Querfördereinrichtung 19 zusammen mit der jeweiligen Aufnahmeeinrichtung 18 an dem jeweiligen vierten Querträger 13 aufgenommen. An der zweiten Seite des Längsträgers 12 ist eine zweite Querfördereinrichtung 19 zusammen mit der jeweiligen Aufnahmeeinrichtung 18 an dem jeweiligen vierten Querträger 14 aufgenommen, wobei beide dieser Querfördereinrichtungen 19 als Bandförderer ausgeführt sind.

Wie den Zeichnungen entnommen werden kann, sind in Ernterichtung bzw. Zugrichtung der Erntevorrichtung gesehen, die Querfördereinrichtungen 19 hinter den Aufnahmeorganen 18 angeordnet.

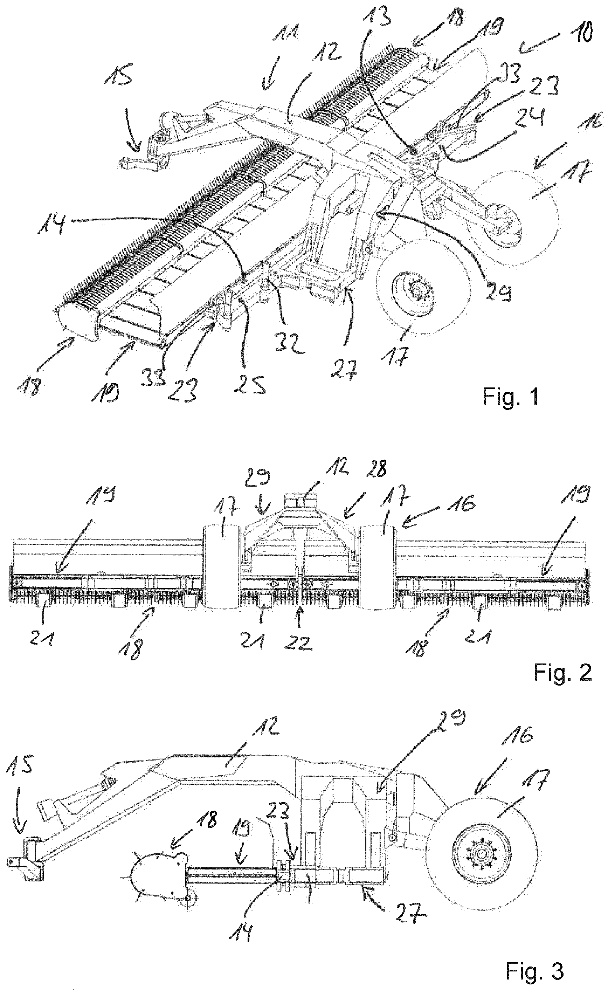

In der in den Fig. 1 bis 3 gezeigten Arbeitsstellung der Erntevorrichtung 10 sind die beiden als Bandförderer ausgebildeten Querfördereinrichtungen 19, die an unterschiedlichen Seiten des Längsträgers 12 angeordnet sind, in Querrichtung gesehen unter Minimierung des Abstands zwischen den Querfördereinrichtungen 19 und unter Ausbildung eines Übergabebereichs 22 zwischen den Querfördereinrichtungen 19 zusammengeschoben bzw. aufeinander zu bewegt. Bei in gleicher Richtung angetriebenen Querfördereinrichtungen 19 kann das Erntegut über die gesamte Quererstreckung der Erntevorrichtung 10 auf eine Seite derselben gefördert werden. In diesem Fall wird dann das Erntegut seitlich neben der Erntevorrichtung 10 zu einem Seitenschwad aus dem Untergrund abgelegt.

Im Unterschied hierzu ist es auch möglich, dass jede der als Bandförderer ausgebildeten Querfördereinrichtungen 19 jeweils in Querrichtung nach außen vom Längsträger 12 weg verlagert ist, wodurch dann unter Aufhebung des Übergabebereichs 22 zwischen den Querfördereinrichtungen 19 ein Spalt zwischen den Querfördereinrichtungen 19 ausgebildet ist (nicht gezeigt). In diesem Fall kann dann bei gegenläufig angetriebenen Querfördereinrichtungen 19 im Bereich dieses Spalts das Erntegut zu einem sogenannten Mittenschwad vereinigt und auf dem Untergrund angelegt werden. Bei dieser Verlagerung der Querfördereinrichtungen 19 werden auch die Aufnahmeorgane 18 verlagert.

Wie oben bereits ausgeführt, sind im Bereich beider vierter Querträger 13, 14 des Traggestells 11 jeweils eine Querfördereinrichtung 19 und jeweils ein Aufnahmeorgan 18 am jeweiligen vierter Querträger 13, 14 aufgenommen, wobei bei der obigen Ausbildung oder Aufhebung des Übergabebereichs 22 die vierten Querträger 13, 14 zusammen mit den an denselben aufgenommenen Querfördereinrichtungen 19 und Aufnahmeorganen 18 über Lenkerkinematiken 23 relativ zu den dritten Querträgern 24, 25 des Tragrahmens 11 translatorisch in Querrichtung verlagerbar sind.

Jede Lenkerkinematik 23 verfügt über Lenker 32, 33, die an den jeweiligen vierten Querträgern 13, 14 und dritten Querträgern 24, 25 gelenkig angreifen, um die translatorische Verschiebbarkeit der vierten Querträgern 13, 14 in Querrichtung zu gewährleisten.

Alternativ kann die translatorische Verschiebbarkeit der vierten Querträger 13, 14 durch Teleskopträger realisiert werden.

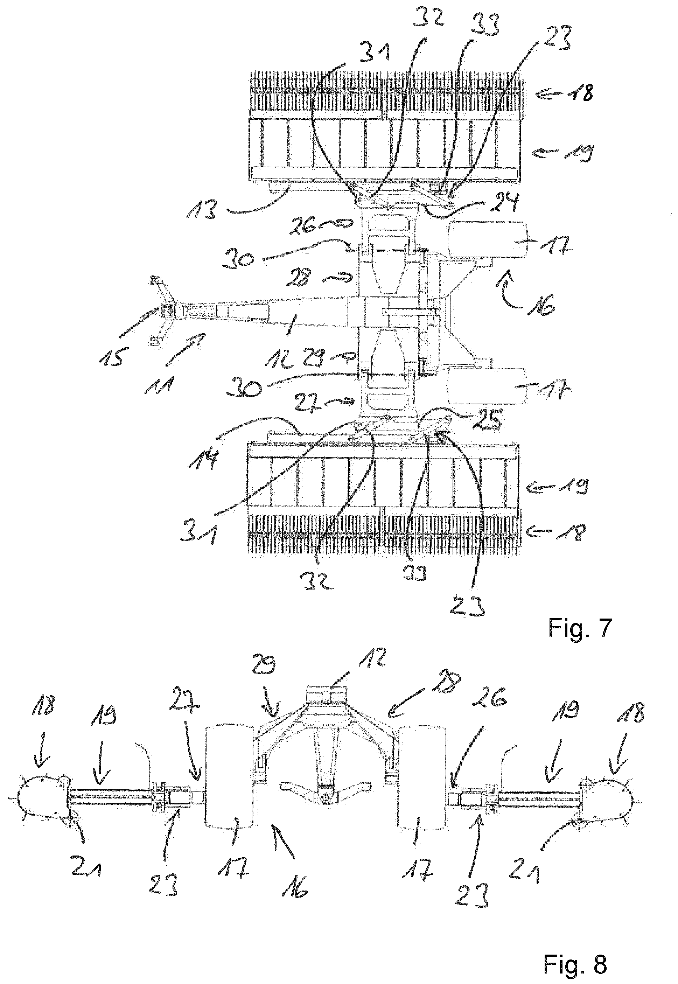

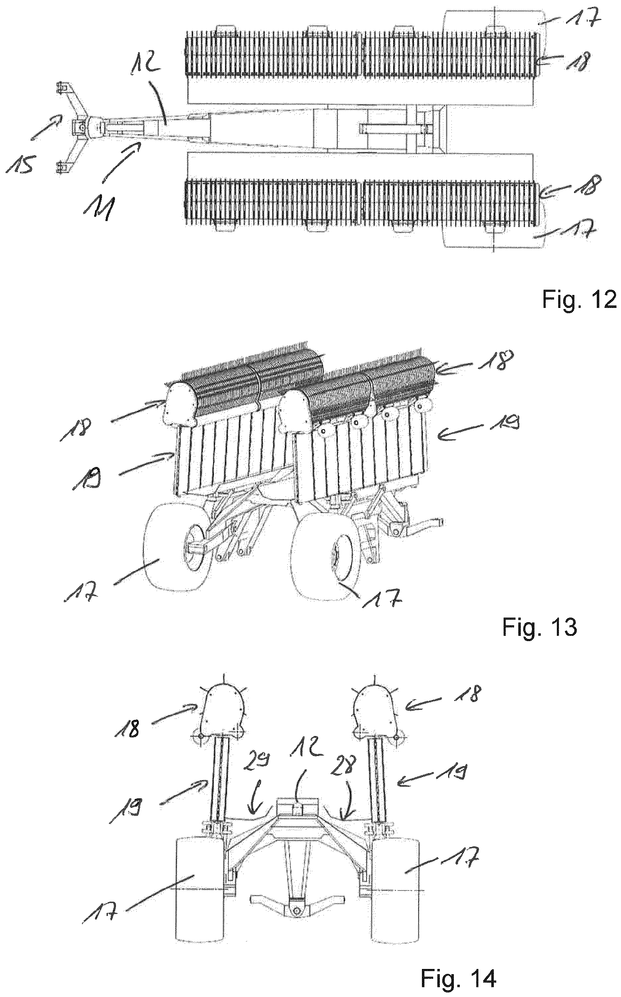

Die hier vorliegende Erfindung betrifft nun solche Details der Erntevorrichtung 10, mithilfe derer dieselbe einfach und zuverlässig zwischen der in Fig. 1 bis 3 gezeigten Arbeitsstellung in die in Fig. 12 bis 14 gezeigte Transportstellung überführbar ist, wobei bei dieser Überführung der Erntevorrichtung 10 von der Arbeitsstellung der Fig. 1 bis 3 in die Transportstellung der Fig. 12 bis 14 die Erntevorrichtung eine Zwischenstellung einnimmt, nämlich die Zwischenstellung der Fig. 7 bis 9, um danach letztendlich die Transportstellung der Fig. 12 bis 14 einzunehmen.

Um nun die erfindungsgemäße Erntevorrichtung 10 von der in den Fig. 1 bis 3 gezeigten Arbeitsstellung in die in Fig. 12 bis 14 gezeigte Transportstellung zu überführen, ist der an der ersten Seite des Längsträgers 12 angeordnete, das jeweilige Aufnahmeorgan 18 und die jeweilige Querfördereinrichtung 19 aufnehmende, verlagerbare vierte Querträger 13 zusammen mit dem jeweiligen dritten Querträger 24 aus der Arbeitsstellung heraus um die sich in vertikaler Hochrichtung erstreckende Achse 31 relativ zu dem jeweiligen zweiten Querträger 26 und damit auch relativ zu dem jeweiligen ersten Querträger 28 in eine Zwischenstellung verlagerbar. Hierzu sind der jeweilige dritte und vierte Querträger 13, 24 zusammen mit dem jeweiligen Aufnahmeorgan 18 und der jeweiligen Querfördereinrichtung 19 um die jeweilige sich in vertikaler Hochrichtung erstreckende Achse 31 in einer ersten Richtung nach hinten verlagerbar, insbesondere klappbar, und zwar um einen Winkel von 90°±5°, vorzugsweise um einen Winkel von 90°.

Auf analoge Art und Weise ist der an der zweiten Seite des Längsträgers 12 angeordnete, das jeweilige Aufnahmeorgan 18 und die jeweilige Querfördereinrichtung 19 aufnehmende, verlagerbare vierte Querträger 14 zusammen mit dem jeweiligen dritten Querträger 27 aus der Arbeitsstellung heraus um eine weitere sich in vertikaler Richtung erstreckende Achse 31 relativ zu dem jeweiligen zweiten Querträger 27 und damit dem jeweiligen ersten Querträger 29 in die Zwischenstellung verlagerbar, und zwar in einer zur ersten Richtung entgegengesetzten zweiten Richtung wiederum nach hinten um einen Winkel von 90°±5°, vorzugsweise um einen Winkel von 90°.

Die an beiden Seiten des Längsträgers 12 angeordneten Aufnahmeorgane 18 und Querfördereinrichtungen 19 werden vorzugsweise gleichzeitig nach hinten verlagert.

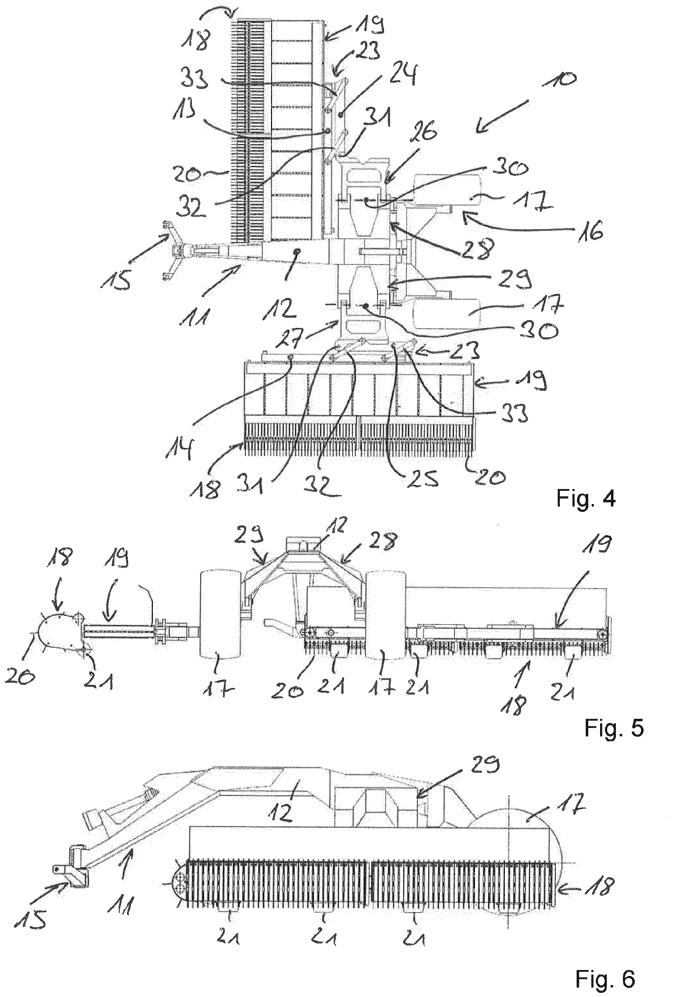

Bei schwierigen Bodenverhältnissen, insbesondere bei Schräglagen, können die beiden Seiten nacheinander in die Zwischenposition gemäß Fig. 4-6 verlagert werden, um zu verhindern, dass die Erntemaschine umkippt.

Der Abfolge der Fig. 4 bis 6 und Fig.7 bis 8 kann dabei entnommen werden, dass dann ausgehend von der Arbeitsstellung der Fig. 1 bis 3 zunächst das zur einer Seite des Längsträger 12 angeordnete Aufnahmeorgan 18 zusammen mit der jeweiligen Querfördereinrichtung 19 um die jeweilige vertikale Hochachse 31 nach hinten verlagert wird, wobei bei dieser Verlagerung in die jeweilige Zwischenstellung sich das jeweilige Aufnahmeorgan 18 über seine Tasträder 21 auf dem Untergrund abstützt.

Nachdem das an dieser Seite positionierte Aufnahmeorgan 18 zusammen mit der jeweiligen Querfördereinrichtung 19 aus der in Fig. 1 bis 3 gezeigten Arbeitsstellung in die in Fig. 4 bis 6 gezeigte Zwischenstellung verlagert wurde, wird nachfolgend das an der anderen Seite des Längsträgers 12 angeordnete Aufnahmeorgan 18 zusammen mit der jeweiligen Querfördereinrichtung 19 um die jeweilige sich in vertikaler Richtung erstreckende Hochachse 31 nach hinten verlagert, sodass dann gemäß Fig. 7 und 8 beide Aufnahmeorgane 18 zusammen mit den jeweiligen Querfördereinrichtungen 19 in ihre jeweilige Zwischenstellung verlagert sind.

Aus ihrer jeweiligen Zwischenstellung heraus sind die Aufnahmeorgane 18 und die Querfördereinrichtungen 19, die an den unterschiedlichen Seiten des Längsträgers 12 angeordnet sind, um jeweils eine sich in horizontaler Längsrichtung erstreckende Achse 30 verlagerbar, und zwar dadurch, dass dieselben mit dem jeweiligen zweiten Querträger 26, 27 relativ zum jeweiligen ersten Querträger 28, 29, der fest am Längsträger 12 angreift, in Richtung auf die Transportstellung verlagerbar sind, und zwar jeweils nach oben um 90° ± 5°, vorzugsweise um 90°.

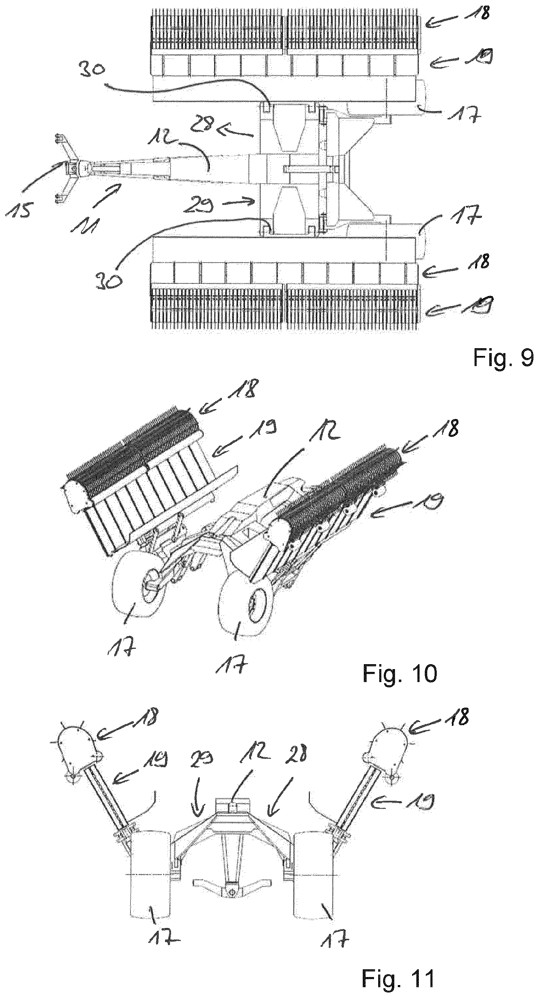

Fig. 9 bis 10 zeigen eine Zwischenstellung, in welcher die Aufnahmeorgane 18 und Querfördereinrichtungen 19 noch nicht vollständig nach oben in die Transportstellung verlagert wurden.

In Fig. 12 bis 14 hingegen sind die Aufnahmeorgane 18 und Querfördereinrichtungen 19 jeweils vollständig in ihre Transportstellung nach oben verlagert, wobei dies für die an unterschiedlichen Seiten des Längsträgers 12 angeordneten Aufnahmeorgane 18 und Querfördereinrichtungen 19 in entgegengesetzten Richtungen erfolgt.

Die Verlagerung der an unterschiedlichen Seiten des Längsträgers 12 angeordneten Aufnahmeorgane 18 und Querfördereinrichtungen 19 aus der Zwischenstellung in die Transportstellung erfolgt vorzugsweise gleichzeitig bzw. zeitlich überschneidend. Diese Abfolge bei der Überführung der Erntevorrichtung von der Arbeitsstellung in die Transportstellung ist bevorzugt, um bei der Überführung der Erntevorrichtung in die Transportstellung dieselbe stets ausreichend zu stabilisieren.

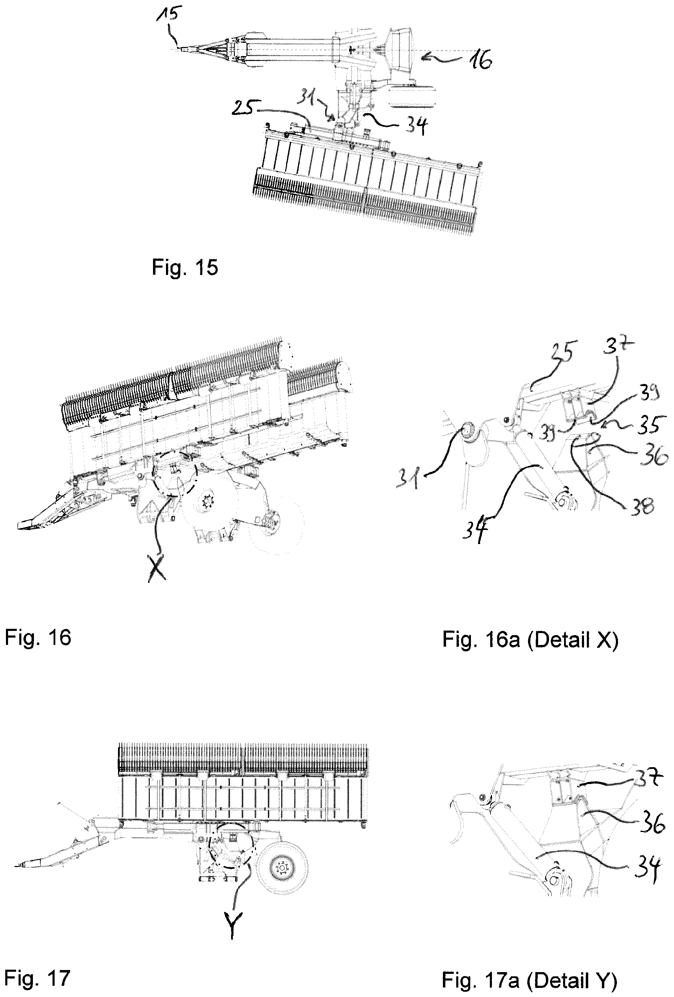

Erfindungsgemäß ist, wie in den Figuren 15 bis 17a dargestellt, für die dritten Querträger 24, 25 jeweils ein formschlüssiges Auflager 35 (Fig. 16a, 17a) vorgesehen.

Gemäß der Erfindung werden die jeweiligen dritten Querträger 24, 25 mittels eines Aktors 34, vorzugsweise eines Hydraulikzylinders, um die Achse 31 um etwa 80° bis 85° nach hinten verlagert. Für den in Fahrtrichtung links angeordneten dritten Querträger 25 ist dies in Fig. 15 dargestellt. Aus dieser Zwischenstellung werden die dritten Querträger 24, 25 um die Achse 30 nach oben geklappt und zwar jeweils um 90° ± 5° - vorzugswiese um 90°. Diese weitere Zwischenstellung ist in Fig. 16 dargestellt. Das darin durch einen strichpunktierten Kreis gekennzeichnete Detail X ist in Fig. 16a vergrößert dargestellt.

In Fig. 16a ist erkennbar, dass das Auflager 35 aus einem höckerartigen Unterteil 36 besteht, welches am Tragrahmen oder am Fahrwerksrahmen der Erntemaschine angeordnet ist, und einem Oberteil 37 besteht, welches am dritten Querträger 25 angeordnet ist. Es ist erkennbar, dass das Oberteil 37 in dieser weiteren Zwischenstellung etwas oberhalb des Unterteils 36 positioniert ist. Das höckerartige Unterteil 36 weist an seiner Oberseite zwei gegeneinander geneigte Flächen 38 auf, die voneinander abgewendet sind und das Oberteil 37 weist zwei gegeneinander geneigte Flächen 39 auf, die zueinander hingewendet sind. Die Flächen 38 des Unterteils 36 und die Flächen 39 des Oberteils 37 bilden in der Transportstellung einen Formschluss.

Dazu wird der Aktor 34 weiter eingezogen, so dass sich der dritte Querträger 25 mit der Arbeitseinheit, bestehend aus Aufnahmeorganen und Querfördereinrichtung, vollständig in seine Transportposition absenkt (siehe Fig. 17), wobei die Flächen 39 des Oberteils 37 mit den Flächen 38 des Unterteils 36 in Anlage kommen (siehe Detail Y in Fig. 17a). Der Aktor 34 wird in dieser Stellung blockiert, wodurch der dritte Querträger 25 in der Transportposition sicher fixiert ist. Vorzugsweise wird der Aktor 34 als Hydraulikzylinder ausgeführt und zur Fixierung seiner Stellung werden dessen Ölzuführleitungen abgesperrt.

Durch diese vorteilhaft einfache Fixierung der Transportposition kann auf zusätzliche Sicherungselemente verzichtet werden.

### Bezugszeichenliste

- 10: Erntevorrichtung
- 11: Tragrahmen
- 12: Längsträger
- 13: vierter Querträger
- 14: vierter Querträger
- 15: Kupplungseinrichtung
- 16: Fahrwerk
- 17: Rad
- 18: Aufnahmeorgane
- 19: Querfördereinrichtung
- 20: Aufnahmezinken
- 21: Tastrad
- 22: Übergabebereich
- 23: Lenkerkinematik
- 24: dritter Querträger
- 25: dritter Querträger
- 26: zweiter Querträger
- 27: zweiter Querträger
- 28: erster Querträger
- 29: erster Querträger
- 30: Achse
- 31: Achse
- 32: Lenker
- 33: Lenker
- 34: Aktor
- 35: Auflager
- 36: Unterteil
- 37: Oberteil
- 38: Fläche
- 39: Fläche

## Patentansprüche

1. Erntevorrichtung, nämlich Merger oder Pickup-Schwader,
mit einem einen Längsträger (12) und Querträger (13, 14, 24, 25, 26, 27, 28, 29) aufweisenden Tragrahmen (11),
mit einem Räder (17) aufweisenden Fahrwerk (16),
mit als Pickup ausgebildeten Aufnahmeorganen (18) zum Aufnehmen von Erntegut und mit als Bandförderer ausgebildeten Querfördereinrichtungen (19) zum Fördern des aufgenommenen Ernteguts in einer quer zu einer Längsrichtung verlaufenden Querförderrichtung,
wobei an einer ersten Seite und an einer zweiten Seite des Längsträgers (12) jeweils ein Aufnahmeorgan (18) und jeweils eine Querfördereinrichtung (19) an einem jeweiligen verlagerbaren Querträger (13, 14) des Tragrahmens (11) aufgenommen sind,
wobei ein an einer ersten Seite des Längsträgers (12) angeordneter, das jeweilige Aufnahmeorgan (18) und die jeweilige Querfördereinrichtung (19) aufnehmender, verlagerbarer Querträger (13) aus einer Arbeitsstellung heraus um eine sich in vertikaler Hochrichtung erstreckende Achse (31) relativ zu einem weiteren verlagerbaren Querträger (26) in eine Zwischenstellung und aus dieser Zwischenstellung heraus mit dem weiteren verlagerbaren Querträger (26) um eine sich in horizontaler Längsrichtung erstreckende Achse (30) relativ zu einem am Längsträger (12) angreifenden feststehenden Querträger (28) in eine Transportstellung verlagerbar ist,
wobei ein an einer zweiten Seite des Längsträgers (12) angeordneter, das jeweilige Aufnahmeorgan (18) und die jeweilige Querfördereinrichtung (19) aufnehmender, verlagerbarer Querträger (14) aus einer Arbeitsstellung heraus um eine weitere sich in vertikaler Hochrichtung erstreckende Achse (31) relativ zu einem weiteren verlagerbaren Querträger (27) in eine Zwischenstellung und aus dieser Zwischenstellung heraus mit dem weiteren verlagerbaren Querträger (27) um eine weitere sich in horizontaler Längsrichtung erstreckende Achse (30) relativ zu einem weiteren am Längsträger (12) angreifenden feststehenden Querträger (29) in eine Transportstellung verlagerbar ist,
**dadurch gekennzeichnet, dass**
für einen dritten Querträger (24, 25),
der gegenüber einem zweiten Querträger (26, 27) um eine vertikale Achse (31), die sich in Hochrichtung erstreckt, verlagerbar ist,
wobei der zweite Querträger (26, 27) an einen ersten Querträger (28, 29) angreift und relativ zum ersten Querträger (28, 29) um eine horizontale Achse (30), die sich in Längsrichtung erstreckt, verlagerbar ist,
und wobei der erste Querträger (28, 29) fest am Längsträger (12) angreift, und wobei für den dritten Querträger (24, 25) ein formschlüssiges Auflager (35) vorgesehen ist und ein Aktor (34) den dritten Querträger (24, 25) in der Transportstellung am Auflager (35) fixiert.

2. Erntevorrichtung nach Anspruch 1, **dadurch gekennzeichnet, dass**
der an der ersten Seite des Längsträgers (12) angeordnete, das jeweilige Aufnahmeorgan (18) und die jeweilige Querfördereinrichtung (19) aufnehmende Querträger (13) aus der Arbeitsstellung heraus um die sich in vertikaler Hochrichtung erstreckende Achse (31) in einer ersten Richtung um 90°±5° nach hinten in die Zwischenstellung verlagerbar ist,
der an der zweiten Seite des Längsträgers (12) angeordnete, das jeweilige Aufnahmeorgan (18) und die jeweilige Querfördereinrichtung (19) aufnehmende Querträger (14) aus der Arbeitsstellung heraus um die weitere sich in vertikaler Hochrichtung erstreckende Achse (31) in einer zur ersten Richtung entgegengesetzten zweiten Richtung um 90°±5° nach hinten in die Zwischenstellung verlagerbar ist.

3. Erntevorrichtung nach Anspruch 1 oder 2, **dadurch gekennzeichnet, dass**
der an der ersten Seite des Längsträgers (12) angeordnete, das jeweilige Aufnahmeorgan (18) und die jeweilige Querfördereinrichtung (19) aufnehmende Querträger (13) aus der Zwischenstellung heraus um die sich in horizontaler Längsrichtung erstreckende Achse (30) in einer ersten Richtung um 90°±5° nach oben in die Transportstellung verlagerbar ist,
der an der zweiten Seite des Längsträgers (12) angeordnete, das jeweilige Aufnahmeorgan (18) und die jeweilige Querfördereinrichtung (19) aufnehmende Querträger (14) aus der Zwischenstellung heraus um die weitere sich in horizontaler Längsrichtung erstreckende Achse (30) in einer zur ersten Richtung entgegengesetzten zweiten Richtung um 90°±5° nach oben in die Transportstellung verlagerbar ist.

4. Erntevorrichtung nach einem der Ansprüche 1 bis 3, **dadurch gekennzeichnet, dass** sich das jeweilige Aufnahmeorgan (18) bei der Überführung zwischen der Arbeitsstellung und der Zwischenstellung mit Tasträdern (21) auf einem Untergrund abstützt.

## Claims

1. Harvesting apparatus, specifically merger or pickup windrower,
with a load-bearing frame (11) which has a longitudinal carrier (12) and transverse carriers (13, 14, 24, 25, 26, 27, 28, 29),
with a chassis (16) which has wheels (17),
with receiving members (18) which are in the form of pick-ups and serve for receiving harvested crop, and with transverse conveying devices (19) which are in the form of belt conveyors and serve for conveying the received harvested crop in a transverse conveying direction which extends transversely to a longitudinal direction,
wherein in each case one receiving member (18) and in each case one transverse conveying device (19) are received on a first side and on a second side of the longitudinal carrier (12), on a respective displaceable transverse carrier (13, 14) of the load-bearing frame (11),
wherein a displaceable transverse carrier (13) arranged on a first side of the longitudinal carrier (12) and receiving the respective receiving member (18) and the respective transverse conveying device (19) is displaceable about an axis (31), which extends in a vertical height direction, relative to a further displaceable transverse carrier (26) into an intermediate position from a working position and, together with the further displaceable transverse carrier (26), about an axis (30), which extends in a horizontal longitudinal direction, relative to a fixed transverse carrier (28), which acts on the longitudinal carrier (12), into a transport position from said intermediate position,
wherein a displaceable transverse carrier (14) arranged on a second side of the longitudinal carrier (12) and receiving the respective receiving member (18) and the respective transverse conveying device (19) is displaceable about a further axis (31), which extends in the vertical height direction, relative to a further displaceable transverse carrier (27) into an intermediate position from a working position and, together with the further displaceable transverse carrier (27), about a further axis (30), which extends in the horizontal longitudinal direction, relative to a further fixed transverse carrier (29), which acts on the longitudinal carrier (12), into a transport position from said intermediate position,
**characterized in that,**
for a third transverse carrier (24, 25),
which is displaceable about a vertical axis (31), which extends in the height direction, relative to a second transverse carrier (26, 27),
wherein the second transverse carrier (26, 27) acts on a first transverse carrier (28, 29) and is displaceable about a horizontal axis (30), which extends in the longitudinal direction, relative to the first transverse carrier (28, 29),
and wherein the first transverse carrier (28, 29) acts in a fixed manner on the longitudinal carrier (12), and wherein a form-fitting support (35) is provided for the third transverse carrier (24, 25), and an actuator (34) fixes the third transverse carrier (24, 25) to the support (35) in the transport position.

2. Harvesting apparatus according to Claim 1,
**characterized in that**
the transverse carrier (13) arranged on the first side of the longitudinal carrier (12) and receiving the respective receiving member (18) and the respective transverse conveying device (19) is displaceable about the axis (31) extending in the vertical height direction through 90°±5° towards the rear in a first direction into the intermediate position from the working position,
the transverse carrier (14) arranged on the second side of the longitudinal carrier (12) and receiving the respective receiving member (18) and the respective transverse conveying device (19) is displaceable about the further axis (31) extending in the vertical height direction through 90°±5° towards the rear in a second direction, which is opposite to the first direction, into the intermediate position from the working position.

3. Harvesting apparatus according to Claim 1 or 2,
**characterized in that**
the transverse carrier (13) arranged on the first side of the longitudinal carrier (12) and receiving the respective receiving member (18) and the respective transverse conveying device (19) is displaceable about the axis (30) extending in the horizontal longitudinal direction through 90°±5° towards the top in a first direction into the transport position from the intermediate position,
the transverse carrier (14) arranged on the second side of the longitudinal carrier (12) and receiving the respective receiving member (18) and the respective transverse conveying device (19) is displaceable about the further axis (30) extending in the horizontal longitudinal direction through 90°±5° towards the top in a second direction, which is opposite to the first direction, into the transport position from the intermediate position.

4. Harvesting apparatus according to one of Claims 1 to 3, **characterized in that** the respective receiving member (18) is supported on an underlying surface by feeler wheels (21) during the transfer between the working position and the intermediate position.

## Revendications

1. Dispositif de récolte, à savoir une andaineuse Merger ou une andaineuse Pickup,
avec un cadre porteur (11) présentant un longeron (12) et des traverses (13, 14, 24, 25, 26, 27, 28, 29),
avec un châssis (16) présentant des roues (17),
avec des organes de réception (18) réalisés sous forme Pickup pour recevoir le produit récolté et avec des dispositifs de transport transversal (19) réalisés sous forme de convoyeur à bande pour transporter le produit récolté ramassé dans une direction de transport transversal s'étendant transversalement à une direction longitudinale,
un organe de réception (18) et un dispositif de transport transversal (19) étant montés respectivement sur un premier côté et sur un deuxième côté du longeron (12) sur une traverse respective déplaçable (13, 14) du cadre porteur (11),
une traverse déplaçable (13), disposée sur un premier côté du longeron (12) et recevant l'organe de réception (18) respectif et le dispositif de transport transversal (19) respectif, étant apte à être déplacée depuis une position de travail autour d'un axe (31) s'étendant dans la direction verticale vers le haut par rapport à une autre traverse (26) déplaçable dans une position intermédiaire, et étant apte à être déplacée depuis cette position intermédiaire avec l'autre traverse (26) déplaçable autour d'un axe (30) s'étendant dans la direction longitudinale horizontale par rapport à une traverse (28) fixe agissant sur le longeron (12) dans une position de transport,
une traverse déplaçable (14), agencée sur un deuxième côté du longeron (12) et recevant l'organe de réception (18) respectif et le dispositif de transport transversal (19) respectif, étant apte à être déplacée à partir d'une position de travail autour d'un autre axe (31) s'étendant dans la direction verticale vers le haut par rapport à une autre traverse (27) déplaçable dans une position intermédiaire et étant apte à être déplacée à partir de cette position intermédiaire avec l'autre traverse (27) déplaçable, autour d'un autre axe (30) s'étendant dans la direction longitudinale horizontale par rapport à une autre traverse (29) fixe s'engageant sur le support longitudinal (12) dans une position de transport, **caractérisé en ce que**
pour une troisième traverse (24, 25), qui est apte à être déplacée par rapport à une deuxième traverse (26, 27) autour d'un axe vertical (31) qui s'étend dans la direction verticale,
la deuxième traverse (26, 27) s'engageant sur une première traverse (28, 29) et étant apte à être déplacée par rapport à la première traverse (28, 29) autour d'un axe horizontal (30), qui s'étend dans la direction longitudinale,
et la première traverse (28, 29) s'engageant de manière fixe sur le longeron (12), et un support (35) à engagement par complémentarité de formes étant prévu pour la troisième traverse (24, 25) et un actionneur (34) fixant la troisième traverse (24, 25) sur le support (35) dans la position de transport.

2. Dispositif de récolte selon la revendication 1,
**caractérisé en ce que**
la traverse (13) disposée sur le premier côté du longeron (12) et recevant l'organe de réception (18) respectif et le dispositif de transport transversal (19) respectif est apte à être déplacée vers l'arrière de 90°±5° à partir de la position de travail, dans une première direction autour de l'axe (31) s'étendant dans la direction verticale vers le haut, vers la position intermédiaire, la traverse (14) disposée sur le deuxième côté du longeron (12) et recevant l'organe de réception (18) respectif et le dispositif de transport transversal (19) respectif est apte à être déplacée vers l'arrière de 90°±5° à partir de la position de travail, dans une deuxième direction opposée à la première direction autour de l'autre axe (31) s'étendant dans la direction verticale vers le haut, jusqu'à la position intermédiaire.

3. Dispositif de récolte selon la revendication 1 ou la revendication 2, **caractérisé en ce que**
la traverse (13) disposée sur le premier côté du longeron (12) et recevant l'organe de réception (18) respectif et le dispositif de transport transversal (19) respectif est apte à être déplacée de 90°±5° vers le haut dans une première direction à partir de la position intermédiaire, autour de l'axe (30) s'étendant dans la direction longitudinale horizontale, jusqu'à la position de transport,
la traverse (14) disposée sur le deuxième côté du longeron (12) et recevant l'organe de réception (18) respectif et le dispositif de transport transversal (19) respectif est apte à être déplacée vers le haut de 90°±5° depuis la position intermédiaire autour de l'autre axe (30) s'étendant dans la direction longitudinale horizontale, dans une deuxième direction opposée à la première direction, jusqu'à la position de transport.

4. Dispositif de récolte selon l'une des revendications 1 à 3, **caractérisé en ce que** l'organe de réception (18) respectif s'appuie sur un support par des roues de jauge (21) lors du transfert entre la position de travail et la position intermédiaire.
